# EUROPÄISCHE PATENTANMELDUNG

(11) **EP 1 742 022 A1**
(43) Veröffentlichungstag der Anmeldung: **10.01.2007**
(21) Anmeldenummer: 06013202.4
(22) Anmeldetag: 27.06.2006
(51) Int. Cl.: G01D 5/245, G01D 5/16

(54) **Positionsdetektion an einer Stange**

(30) Priorität: 05.07.2005 DE 102005031333
(71) Anmelder: ZF FRIEDRICHSHAFEN AG, 88046 Friedrichshafen (DE)
(72) Erfinder: Thomoä, Achim, Dr., 97493 Bergrheinfeld (DE); Zillner, Karl, Dr., 75217 Birkenfeld (DE)

(57) **Zusammenfassung**

Positionsdetektion an einer Stange, umfassend eine Skalierung, die magnetische Segmente definierter Breite und Anzahl zu mehreren Referenzstellen aufweist, die von einer Magnetfeld-Sensoreinrichtung erfasst werden, wobei aus der Anzahl der magnetischen Segmente und der Referenzstellen zumindest mittelbar die absolute Stangenposition bestimmbar ist, indem die Skalierung über ihre gesamte Länge aus magnetischen Segmenten besteht, die Referenzstellen eine höhere Feldstärke als eine Anzahl Polabschnitte gleicher Länge aufweisen, wobei aus dem Abstand der Referenzstellen und der Anzahl der Polabschnitte die Absolutposition ermittelbar ist.

## Beschreibung

Die Erfindung betrifft eine Positionsdetektion an einer Stange gemäß dem Oberbegriff von Patentanspruch 1.

Aus der DE 43 44 291 A1 ist eine axiale Positionsdetektion an einer Stange bekannt, die eine einspurige magnetische Skala umfasst. Die Skala weist unmagnetische Referenzstellen unterschiedlicher Tiefe in Kombination mit magnetischen Teilen auf. Aus der Abfolge von unmagnetischen Referenzstellen unterschiedlicher Tiefe und magnetischen Abschnitten der Skala kann durch Zählung der zurückgelegten Referenzstellen größerer Tiefe die momentane axiale Position der Stange, z. B. innerhalb eines Zylinders, ermittelt werden. Eine Magnetsensor-Einrichtung erkennt die unmagnetischen tieferen Referenzstellen aufgrund einer schwächeren Signalamplitude. Daraus folgt, dass die Magnetsensor-Einrichtung drei Grundfeldstärken unterscheiden muss, die beim Überfahren der Skala durch eine Überlagerung der Magnetsensor-Einrichtung mit unmagnetischen Referenzstellen unterschiedlicher Tiefe und den magnetischen Bereichen zwischen den unmagnetischen Referenzstellen ein Ausgangssignal ergeben. Aufgrund dieser Bauweise ist es schwierig, eine Fehlererkennung einzuführen, die z. B. eine gestörte Stromversorgung oder eine partielle Verschmutzung der Stange erkennt.

Aufgabe der vorliegenden Erfindung ist es, eine Positionsdetektion zu realisieren, die einerseits einfach im Grundaufbau ist und andererseits eine zuverlässige Fehlererkennung im System ermöglicht.

Erfindungsgemäß wird die Aufgabe dadurch gelöst, dass die Skalierung über ihre gesamte Länge aus magnetischen Segmenten besteht, die Referenzstellen eine höheren Feldstärke als eine Anzahl Polabschnitte gleicher Länge aufweisen, wobei aus dem Abstand der Referenzstellen und der Anzahl der Polabschnitte die Absolutposition ermittelbar ist.

Der große Vorteil im Vergleich zum genannten Stand der Technik besteht darin, dass eine Fehlererkennung bei der Positionsdetektion leicht möglich ist. Immer dann, wenn kein magnetfeldabhängiges Signal vorliegt, muss ein Fehler vorliegen.

In weiterer vorteilhafter Ausgestaltung ist vorgesehen, dass der mindestens eine Sensor zur Erfassung der Polstellen als magnetoresistiver Sensor zur Erfassung der Richtung eines Magnetfeldes ausgeführt ist. Bei einem magnetoresistiven Sensor kommt es weniger auf das exakte Maß der magnetische Feldstärke an, so dass die Schmutzempfindlichkeit der Sensor-Einrichtung reduziert ist.

Gemäß einem vorteilhaften Unteranspruch, weisen die Referenzstellen eine im wesentlichen identische Feldstärke auf. Die Magnetfeld-Sensoreinrichtung kann auf größere Signalabweichungen bei den Referenzstellen justiert werden, da es nur auf eine 0-1-Erfassung ankommt.

Drei aufeinander folgende Referenzstellen und die darin enthaltenen Polstellen bilden ein einmaliges Muster innerhalb der Skalierung. Dieses Muster kann mathematisch beschrieben werden, so dass die Auswertegeschwindigkeit der Signale der Sensor-Einrichtung erhöht werden kann.

Um eine einfache und deutliche Unterscheidbarkeit einer Referenzstelle und einer Polstelle zu erreichen, weist eine Referenzstelle die doppelte Länge einer Polstelle auf.

Die Magnetfeld-Sensor-Einrichtung weist mindestens einen Sensor zur Erfassung der Referenzstellen und mindestens einen Sensor zur Erfassung der Polstellen auf. Der Vorteil besteht darin, dass keine Entscheidungsroutine ablaufen muss, ob von einem Sensor eine Referenzstelle oder eine Polstelle erfasst wird.

Die Länge eines Sensors entspricht im wesentlichen der mehrfachen Pollänge. Der Vorteil dieser Maßnahme besteht darin, dass auch dann ein verwertbares Signal vorliegt, wenn ein Sensor in Überdeckung mit einer Referenzstelle steht.

Mindestens zwei Sensoren (S₂ - S₃) sind in Längsrichtung der Skalierung (7) zueinander verschoben angeordnet. Eine Auswertung der damit verbundenen Signalabweichung zwischen den beiden Sensoren ermöglicht die Erkennung der Bewegungsrichtung der Stange auch bei einer oszillierenden Bewegung . Die Absolutposition ist mit einer größeren Genauigkeit sehr viel schneller erfassbar, da ein vorzeichenabhängiges Abzählen der Polstellen möglich ist.

Des weiteren kann vorgesehen sein, dass die Skalierung in einem Längenabschnitt außerhalb eines Feinmessbereichs mindestens zwei Referenzstellen (Rᵢ) in unmittelbarer Reihenfolge enthält. Bei einer Niveauregulierung eines Kraftfahrzeugs ist es außerhalb des Feinmessbereichs relativ unwichtig, um welches exakte Maß der Fahrzeugaufbau von der angestrebten Niveaulage abweicht. Über die als Schalter wirksamen Referenzstellenreihen erkennt das System sehr schnell die Zustände "zu hoch" oder "zu tief", so dass man das System nachregelt und wieder den Feinmessbereich erreicht.

In diesem Zusammenhang ist es sinnvoll, wenn an beiden Endbereichen des Feinmessbereichs eine unterschiedliche Anzahl von Referenzsstellen in Reihe angeordnet sind, um die Zustände "zu hoch" und "zu tief" eindeutig unterscheiden zu können.

Anhand der folgenden Figurenbeschreibung soll die Erfindung näher erläutert werden.

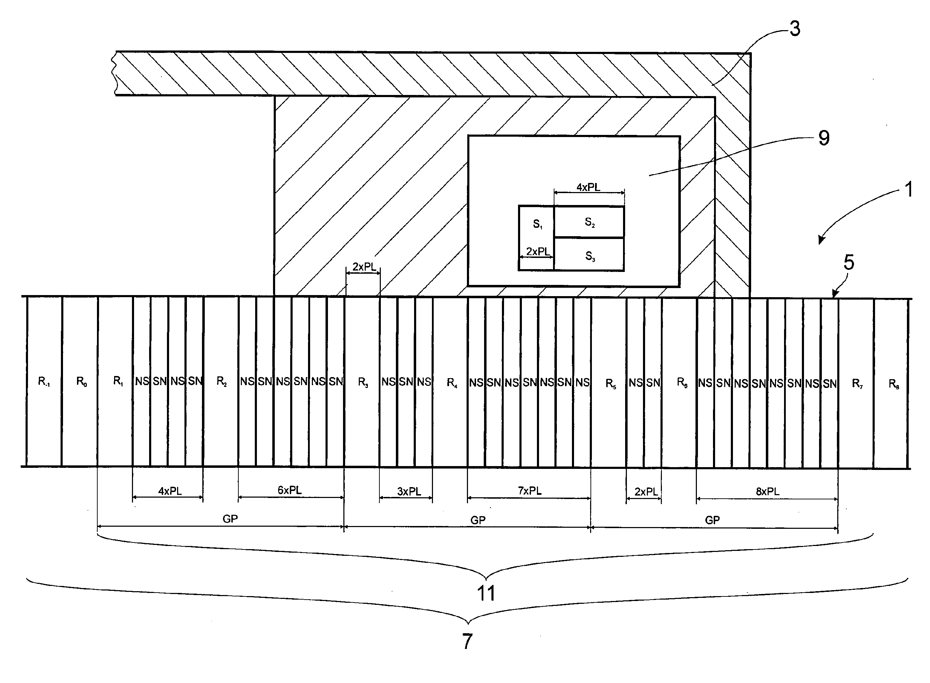

Die einzige Figur zeigt vereinfacht einen Ausschnitt aus einem Kolben-Zylinderaggregat 1, z. B. einem Schwingungsdämpfer, in dessen Zylinder 3 eine Kolbenstange 5 mit einem Rundquerschnitt axial beweglich geführt ist. Auf der Kolbenstange ist eine Skalierung 7 aus magnetischen Segmenten angeordnet, die von einer Beschichtung gebildet wird. Die Skalierung umfasst mehrere Referenzstellen Rᵢ und Polstellen NS; SN. Jede der Referenzstellen R ist doppelt so lang wie eine Polstelle SN, NS, wobei jede der Referenzstellen dieselbe Länge und damit magnetische Feldstärke aufweist, die aber auch deutlich größer ist als die magnetische Feldstärke einer Polstelle. Die Skalierung besteht lückenlos aus magnetischen Segmenten, die umlaufend auf der Oberfläche der Kolbenstange ausgeführt sind, um bei einer Verdrehbewegung der Kolbenstange eine Magnetfeld-Sensoreinrichtung 9 in Überdeckung mit der Skalierung zu halten. Ein Abstand GP zwischen drei aufeinanderfolgenden Referenzstellen z. B. R₁, R₂, R₃ ist konstant, jedoch variieren die Abstände bzw. die Anzahl der Polstellen zwischen den drei betrachteten Referenzstellen und ergeben innerhalb der Skalierung 7 ein einmaliges Muster. Wenn man den Abstand GP konstant hält und das Muster der Polstellen mathematisch beschreibt, kann man mit einer Magnetfeld-Sensoreinrichtung in Verbindung mit einer nicht dargestellten Rechnereinheit schneller die aktuelle Position der Kolbenstange detektieren, als bei einer einfachen Ablage der Muster der Skalierung in einem Speicher und einem Vergleichsverfahren Muster - Position.

Die Magnetfeld-Sensoreinrichtung 9 umfasst einen Sensor S₁ zur Erfassung der Referenzstellen Rᵢ und mindestens zwei Sensoren S₂ - S₃ zur Erfassung der Polstellen. Bei den Sensoren S₂ - S₃ für die Polstellen handelt es sich um magnetoresisitve Sensoren, die die Richtung eines Magnetfeldes erkennen. Jeder der Sensoren S₂ - S₃ weist die mehrfache Länge, bevorzugt vierfache Länge, einer Polstelle auf. Beide Sensoren (S₂ - S₃) sind um das Maß Pollänge/4 zueinander in Verlaufsrichtung der Skalierung verschoben, so dass durch die Auswertung der Signalabweichung zwischen den beiden Sensoren (S₂ - S₃) die Bewegungsrichtung feststellbar ist.

Für einen Schwingungsdämpfer ist es sinnvoll, wenn die Verteilung der Muster der Abstände GP derart gewählt ist, dass in der normalen Niveaulage eines Fahrzeugs, z. B. entsprechend einer Zuladung von zwei Personen, eine sehr gleichmäßige Verteilung der Referenzstellen vorliegt, da dann von der Magnetfeld-Sensoreinrichtung mit einer größeren Sicherheit sehr schnell eine Referenzmarke überfahren wird. Erste Versuche haben ergeben, dass ein GP von 8 mm und einer Pollänge von 0,2 mm sehr vorteilhaft ist. Daraus folgt, dass der minimale Abstand zweier Polstellen 0,2 mm und der maximale Abstand 7,8 mm betragen kann, da der Abstand GP von drei benachbarten Referenzstellen eines Musters 8 mm beträgt. Damit lässt sich eine Skalierung von 150 mm als Feinmessbereich 11 erzeugen. Bei einem Kraftfahrzeug ist dieser betrachtete Federweg für eine Feinregelung völlig ausreichend.

Bei der Initialisierung der Positionsdetektion ist für das System nicht mit Sicherheit erkennbar, welcher Bereich der Skalierung von der Magnetfeld-Sensoreinrichtung 9 erfasst wird. Man muss damit rechnen, dass nur Polstellen NS; SN mit der Magnetfeld-Sensoreinrichtung 9 in Überdeckung stehen. Sobald von dem Sensor S₁ eine Referenzstelle (Rᵢ) erfasst wird, läuft ein nicht dargestelltes Zählwerk als Teil der Signalauswertung der Magnetfeld-Sensoreinrichtung für die Bestimmung der Polstellenanzahl bis zum Erreichen der nächsten Polstelle an. Da jeder Abstand zwischen zwei Polstellen innerhalb der Skalierung nur einmal vorkommt, kann daraus sehr schnell die aktuelle Position der Kolbenstange bestimmt werden. Mit dem Sensor S₆ kann die auch die Bewegungsrichtung der Stange bestimmt werden, so dass man als Enloskette die Anzahl der Polstellen vorzeichenbehafte addiert und damit sehr schnell die Absolutpositon der Stange erfasst.

Man kann zusätzlich vorsehen, dass außerhalb des Feinmeesbereichs 11 nur noch Referenzstellen vorliegen. Wird jenseits einer Referenzstelle der maximale Referenzstellenabstand von den beispielhaften angegebenen 7,8 mm unterschritten, kann man die Niveau-Regelung für das Fahrzeug derart auslegen, dass nur noch eine Signalausgabe "Niveau zu tief" oder "Niveau zu hoch" erfolgt. In dem vorliegenden Beispiel sind die Referenzstellen R₋₁; R₀; R₁ unmittelbar in Reihe angeordnet. Am anderen Ende des Feinmessbereichs 11 sind die Referenzstellen R₇; R₈ angeorndet. Durch die unterschiedliche Anzahl der Referenzstellen in Reihe lassen sich mit sehr einfachen Mitteln die Signale "Niveau zu tief" oder "Niveau zu hoch" erzeugen. Die Niveau-Regelung des Fahrzeugs kann relativ schnell und grob nachführen, bis wieder der Bereich der Feinregelung erreicht ist.

## Patentansprüche

1. Positionsdetektion an einer Stange, umfassend eine Skalierung, die magnetische Segmente definierter Breite und Anzahl zu mehreren Referenzstellen aufweist, die von einer Magnetfeld-Sensoreinrichtung erfasst werden, wobei aus der Anzahl der magnetischen Segmente und der Referenzstellen zumindest mittelbar die absolute Stangenposition bestimmbar ist,
**dadurch gekennzeichnet,**
**dass** die Skalierung (7) über ihre gesamte Länge aus magnetischen Segmenten (Rᵢ SN; NS) besteht, die Referenzstellen (Rᵢ) eine höhere Feldstärke als eine Anzahl Polabschnitte (SN; NS) gleicher Länge aufweisen, wobei aus dem Abstand der Referenzstellen (Rᵢ) und der Anzahl der Polabschnitte (SN; NS) die Absolutposition ermittelbar ist.

2. Positionsdetektion nach Anspruch 1,
**dadurch gekennzeichnet,**
**dass** die Magnetfeld-Sensor-Einrichtung (9) mindestens einen Sensor (S₁) zur Erfassung der Referenzstellen (Rᵢ) und mindestens einen Sensor (S₂- S₃) zur Erfassung der Polstellen (NS; SN) aufweist.

3. Positionsdetektion nach Anspruch 2,
**dadurch gekennzeichnet,**
**dass** der mindestens eine Sensor (S₂- -S₃) zur Erfassung der Polstellen (NS; SN) als magnetoresistiver Sensor zur Erfassung der Richtung eines Magnetfeldes ausgeführt ist.

4. Positionsdetektion nach Anspruch 2,
**dadurch gekennzeichnet,**
**dass** die Länge eines Sensors (S₂- -S₃) im wesentlichen der mehrfachen Pollänge entspricht.

5. Positionsdetektion nach Anspruch 1,
**dadurch gekennzeichnet,**
**dass** die Referenzstellen (Rᵢ) eine im wesentlichen identische Feldstärke aufweisen.

6. Positionsdetektion nach Anspruch 1,
**dadurch gekennzeichnet,**
**dass** drei aufeinander folgende Referenzstellen (Rᵢ; Rᵢ₊₁; Rᵢ₊₂) und die darin enthaltenen Polstellen (NS; SN) ein einmaliges Muster innerhalb der Skalierung (7) bilden.

7. Positionsdetektion nach Anspruch 1,
**dadurch gekennzeichnet,**
**dass** eine Referenzstelle (Rᵢ) die doppelte Länge einer Polstelle aufweist.

8. Positionsdetektion nach Anspruch 2,
**dadurch gekennzeichnet,**
**dass** der Sensor (S₁) zur Erfassung einer Referenzstelle im wesentlichen die Länge einer Referenzstelle (Rᵢ) aufweist.

9. Positionsdetektion nach Anspruch 2,
**dadurch gekennzeichnet,**
**dass** mindestens zwei Sensoren (S₂ - S₃) in Längsrichtung der Skalierung (7) zueinander verschoben angeordnet sind.

10. Positionsdetektion nach Anspruch 1,
**dadurch gekennzeichnet,**
**dass** die Skalierung (7) in einem Längenabschnitt außerhalb eines Feinmessbereichs (11) mindestens zwei Referenzstellen (Rᵢ) in unmittelbarer Reihenfolge enthält.

11. Positionsdetektion nach Anspruch 10,
**dadurch gekennzeichnet,**
**dass** an beiden Endbereichen des Feinmessbereichs eine unterschiedliche Anzahl von Referenzsstellen (Rᵢ) in Reihe angeordnet sind.
